Europäisches Patentamt

(19) European Patent Office

Office européen des brevets

(11) Veröffentlichungsnummer: **0 162 481**
A2

(12) **EUROPÄISCHE PATENTANMELDUNG**

(21) Anmeldenummer: 85107978.0

(51) Int. Cl.⁴: **F 16 D 59/02**

(22) Anmeldetag: 07.10.82

(30) Priorität: 09.10.81 DE 8129499 U

(43) Veröffentlichungstag der Anmeldung:
27.11.85 Patentblatt 85/48

(84) Benannte Vertragsstaaten:
AT BE CH DE FR GB IT LI LU NL SE

(60) Veröffentlichungsnummer der früheren
Anmeldung nach Art. 76 EPÜ: **0 077 032**

(71) Anmelder: ABM Adam Baumüller GmbH Fabrik für
Elektrotechnik in Marktredwitz
Friedenfelserstrasse 24
D-8590 Marktredwitz(DE)

(72) Erfinder: Fritsch, Hans, Ing. grad.
Steinwaldstrasse 26
D-8590 Marktredwitz(DE)

(72) Erfinder: Erhardt, Wolfgang, Ing. grad.
Heidestrasse 17
D-8591 Tröstau(DE)

(72) Erfinder: Bräutigam, Christoph, Ing. grad.
Am Damm 14
D-8598 Waldershof(DE)

(74) Vertreter: Tergau, Enno et al,
Patentanwälte Tergau & Pohl Postfach 11 93 47
Hefnersplatz 3
D-8500 Nürnberg 11(DE)

(54) Scheibenbremsmotor.

(57) Die Erfindung betrifft einen Scheibenbremsmotor mit einer im laüterseitigen Lagerschild (1) einliegenden Bremsspule (5), einem auf das freie Motorwellenende (8) aufgesetzten Lüfter (9) und einer unter Federdruck gegen einen Teil der Innenseite des damit auch als Bremsschiebe wirksamen Lüfters (9) axial verschiebbar am Lagerschild (1) gelagerten Ankerscheibe (10). Zwischen Ankerscheibe (10) und Lüfter (9) ist ein vorzugsweise ringförmig ausgebildeter Bremsbelag (13) angeordnet. Das die Spule (5) umschließende Magneteisen ist als gesonderter Magnetkörper (2) in das aus Aluminium bestehende Lagerschild (1) eingebettet. Zur Geräuschdämpfung ist die Ankerscheibe (10) aus mehreren, insbesondere aus zwei in Aufeinanderlage miteinander verschweißten, nitrierten Stahlscheiben (20,21) zusammengesetzt, von denen eine mit einem Radialschlitz (22) versehen ist.

FIG. 1

Croydon Printing Company Ltd

EP 0 162 481 A2

ABM Adam Baumüller  Gesellschaft mit beschränkter
Haftung  Fabrik für Elektrotechnik in Marktredwitz,
D-8590 Marktredwitz

## Scheibenbremsmotor

Die Erfindung betrifft einen Scheibenbremsmotor mit
den im Oberbegriff des Anspruches 1 aufgeführten Merkmalen. Derartige Scheibenbremsmotoren sind beispielsweise aus DE-B-1 130 521 bzw. DE-B-1 625 621 bekannt.

Dort ist im lüfterseitigen Lagerschild des Scheibenbremsmotors eine Bremsspule angeordnet. Auf das freie
Motorwellenende ist ein Lüfter aufgesetzt, der als
Bremsscheibe wirksam ist. Dazu ist zwischen einer Ankerscheibe und dem Lüfter ein vorzugsweise ringförmig
ausgebildeter Bremsbelag angeordnet, den die axial am
Lagerschild verschiebbar gelagerte Ankerscheibe durch
Federdruck beaufschlagt und ein Bremsmoment am Lüfter
erzeugt. Das die Spule umschließende Magneteisen ist
als gesonderter Magnetkörper in das aus Aluminium bestehende Lagerschild eingebettet.

Nachteilig bei den herkömmlichen Scheibenbremsmotoren
ist die Tatsache, daß die Betätigung der Magnetbremse
mit einer starken Geräuschentwicklung verbunden ist.

Im Zuge verstärkter Lärmschutzvorschriften am Arbeitsplatz liegt der Erfindung die Aufgabe zugrunde, einen
Scheibenbremsmotor zu schaffen, der sich durch ein
niedriges Bremsbetätigungsgeräusch auszeichnet. Diese Aufgabe wird durch das kennzeichnende Merkmal des Anspruches 1 gelöst. Bei einer derartigen Ausgestaltung des Erfindungsgegenstandes ist das Einfallgeräusch der Bremse erheblich verringert. Durch den Aufbau der Ankerscheibe aus mehreren, insbesondere aus zwei in Aufeinanderlage miteinander verschweißten, nitrierten Stahlscheiben, von denen eine mit einem Radialschlitz versehen ist, wird das akustische Verhalten der Ankerscheibe in der gewünschten Richtung beeinflußt.

Durch die Aufheftung bzw. Aufdornung des Bremsbelages an wenigen, über den Umfang verteilten Punkten des Lüfters gemäß dem Kennzeichen des Anspruches 2 wird eine weitergehende Geräuschverminderung erzielt, da die Berührungsfläche zwischen diesen beiden Bauteilen stark verringert ist. Außerdem kann der Bremsbelag durch sein freies Anliegen am Lüfter als Dämpfungsglied wirken. Darüber hinaus ergibt sich eine vereinfachte Auswechselbarkeit des Bremsbelages. Die geräuschmindernde Wirkung gemäß Anspruch 2 wird durch die kennzeichnenden Merkmale der Ansprüche 3 und 4 weiter begünstigt.

Der gemäß Anspruch 5 zwischen Lagerschild und Ankerscheibe einliegende Distanzring aus elastischem Werkstoff verhindert ein metallisches Auftreffen der Ankerscheibe auf das Lagerschild und dient damit ebenfalls besonders zur Geräuschunterdrückung. Darüber hinaus dient dieser Dichtungsring in beiden Schaltstellungen der Ankerscheibe zur Staub- und Feuchtigkeitsabdichtung des Motors und der Bremse nach außen. Da der Ring in Lüftstellung komprimiert ist, bewirkt er zudem eine erhebliche Verringerung der Ausschaltzeit.

Da der Distanzring auch in bremsend den Lüfter beaufschlagender Ankerscheiben-Axialstellung den Zwischenraum zwischen Lagerschild und der Stahlscheibe größeren Durchmessers überbrückt schlägt in keinem Betriebszustand die Stahlscheibe auf den Distanzring auf. Dadurch wird eine weitere Geräuschquelle vermieden.

Das Kennzeichen des Anspruches 7 lehrt eine Maßnahme, mittels derer trotz der zweigeteilten Ausführung der Ankerscheibe die Bremse nur durch eine einzige Druckfeder in Bremsschließrichtung beaufschlagt werden kann. Es ist also in einfacher Weise möglich, das Einfallen der Bremse bei Spannungsausfall mit lediglich einer zentralen Schraubenfeder zu bewirken, die in sicherem Abstand von der Motorwelle geführt ist. Der erfindungsgemäße Scheibenbremsmotor ist also technisch weniger aufwendig realisierbar.

Der Gegenstand der Erfindung wird anhand eines in den Figuren dargestellten Ausführungsbeispieles näher erläutert. Es zeigen:

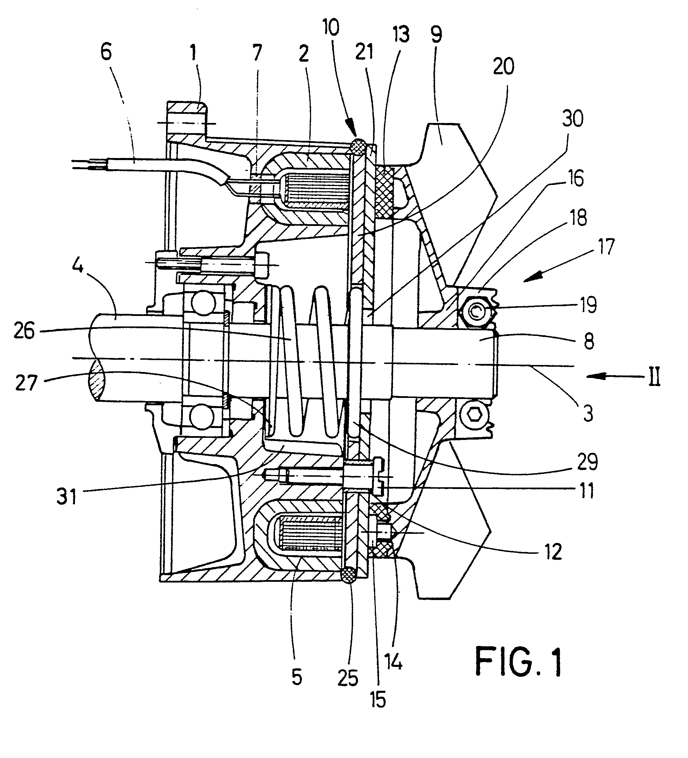

Fig. 1 einen Vertikalschnitt durch das bremsseitige Lagerschild des Motors und dessen in das Lagerschild integrierte Bremse,

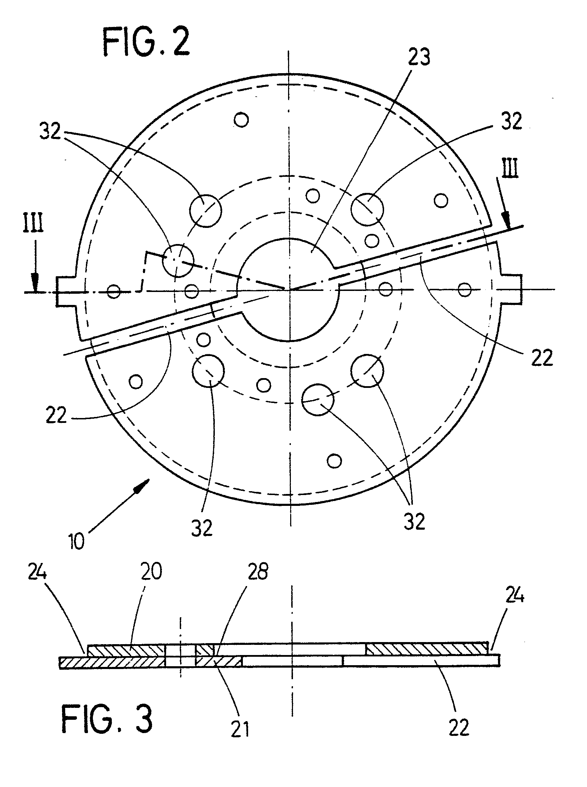

Fig. 2 eine Draufsicht auf die Ankerscheibe entsprechend Pfeil II in Fig. 1,

Fig. 3 einen Schnitt entsprechend der Linie III-III in Fig. 2.

Das rechte Lagerschild 1 des nicht näher dargestellten Scheibenbremsmotors ist aus Aluminiumdruckguß hergestellt. In das Lagerschild 1 ist ein in Form eines Weicheisenringes ausgebildeter Magnetkörper 2 eingebettet. Der ringförmig die Motorachse 3 bzw. die Motorwelle 4 umgebende Magnetkörper 2 dient zur Aufnahme der Bremsspule 5, deren elektrische Zuleitung 6 von der Seite des nicht näher dargestellten Scheibenbremsmotors her durch das Motorgehäuse und eine in das Lagerschild 1 eingesetzte Dichtscheibe 7 hindurch erfolgt. Auf das Ende 8 der Motorwelle 4 ist der Lüfter 9 aufgesetzt, welcher ebenfalls aus Aluminiumdruckguß hergestellt ist. Am Lagerschild 1 ist weiterhin eine insgesamt mit 10 bezeichnete Ankerscheibe in Axialrichtung (Motorachse 3) verschiebbar, jedoch undrehbar gelagert. Hierzu dienen mehrere gleichmäßig über den Umfang des Lagerschildes in dieses eingeschraubte Schrauben 11, die von einer Führungshülse 12 umgeben sind. Die Schrauben 11 bzw. deren Führungshülsen 12 durchsetzen die Ankerscheibe 10 und dienen zur Führung von deren axialer Verschiebebewegung. Zwischen Ankerscheibe 10 und Lüfter 9 ist ein ringförmig die Achse 3 umgebender Bremsbelag 13 wirksam. Der Bremsbelag 13 ist an mehreren gleichmäßig über den Umfang des Lüfters 9 verteilten Punkten auf dem Lüfter 9 aufgeheftet bzw. aufgedornt. Zu diesem Zweck sind auf einem zur Motorachse 3 koaxialen Kreis ringartige Vorsprünge 14 angeordnet, die in entsprechenden Durchgangslöchern 15 des Bremsbelages 13 angeordnet sind, wobei der Außenumfang der Vorsprünge 14 in radialer Richtung aufgedornt mit Haftsitz am Innenumfang der Durchgangslöcher 15 anliegt.

Die Nabe 16 des Lüfters 9 ist auf das Ende 8 der Motorwelle 4 aufgeklemmt. Hierzu ist die Nabe 16 als Klemmschelle 17 ausgebildet. Hierzu ist die Nabe 16 des Lüfters 9 in Radialrichtung geschlitzt (Schlitz 18). Der Schlitz 18 ist in Tangentialrichtung zur Umfangsrichtung der Motorwelle 4 von zwei Klemmschrauben 19 durchsetzt. Die Ankerscheibe 10 besteht aus zwei in Aneinanderlage miteinander verschweißten, nitrierten Stahlscheiben 20,21, von denen die letztgenannte mit einem durchgehenden Radialschlitz 22 versehen ist. Der Radialschlitz 11 mündet in zwei einander diametral gegenüberliegende Umfangsbereiche der Durchtrittsöffnung 23 der Ankerscheibe 10 aus. Die dem Lagerschild 1 zugewandte Stahlscheibe 20 der Ankerscheibe 10 weist einen kleineren Durchmesser als die andere Scheibe 21 auf. In dem dadurch gebildeten Ringabsatz 24 liegt ein als O-Ring ausgebildeter Dichtungsring 25 aus elastischem Werkstoff, z.B. aus Gummi, ein.

Der Dichtungsring 25 überbrückt auch in bremsend den Lüfter 9 beaufschlagender Ankerscheiben-Axialstellung den Zwischenraum zwischen Lagerschild 1 und der Stahlscheibe 21 größeren Durchmessers. Die Ankerscheibe 10 wird von der die Motorwelle 4 umgebenden Druckfeder 26 in Axialrichtung beaufschlagt. Hierzu stützt sich die Druckfeder 26 mit ihrem motorseitigen Ende 27 am Lagerschild 1 ab. Mit ihrem anderen Ende 29 liegt die Druckfeder 26 in einer zentralen Ausnehmung 18 der dem Lagerschild 1 zugewandten Stahlscheibe 20 der Ankerscheibe 10 zentriert ein und stützt sich dort an der anderen Stahlscheibe 21 der Ankerscheibe 10 infolge des kleineren Durchmessers von deren zentraler Durchtrittsöffnung 30 ab.

Der Innendurchmesser der Druckfeder 26 ist größer als der Außendurchmesser der Motorwelle 4. Mit ihrem lagerschildseitigen Ende 27 liegt die Druckfeder 26 auf mehreren Lagerschildvorsprüngen 31 an und wird dadurch zentriert.

Die Scheibenbremse arbeitet wie folgt:
Mit dem Einschalten des nicht dargestellten Motors wird die Bremsspule 5 erregt. Über den Magnetkörper 2 wird die Ankerscheibe 10 schlagartig unter Kompression des Dichtungsringes 25 angezogen. Dadurch verliert die Ankerscheibe 10 ihren Kontakt mit dem Bremsbelag 13 des Lüfters 9. Die Motorwelle 4 kann dadurch ungehindert in Drehung versetzt werden.

Mit dem Abschalten des Motors erfolgt die Abschaltung der Erregung der Bremsspule 5. Der Magnetkörper 2 verliert seine auf die Ankerscheibe 10 einwirkende Magnetkraft. Diese wird schlagartig durch den Druck der komprimierten, als Schraubenfeder ausgebildeten Druckfeder 26 gegen den Bremsbelag 13 des Lüfters 9 gedrückt, was durch die radial geteilte, lüfterseitige Stahlscheibe 21 ohne besondere Geräuschentwicklung geschieht. Aufgrund ihrer drehfesten Lagerung (Schrauben 11 bzw. Führungshülsen 12 und zu deren Aufnahme bestimmte Durchgangslöcher 32) wird der in Drehung befindliche Lüfter 9 bis zum Stillstand abgebremst. Die Abbremsung des Lüfters 9 wird durch dessen als Klemmschelle 17 ausgebildete Nabe 16 auf die Motorwelle 4 übertragen, die nach Motorstillstand in abgebremster Stellung verharrt, bis der Motor wieder eingeschaltet wird und das vorgenannte Schaltspiel wieder beginnt.

ABM Adam Baumüller  Gesellschaft mit beschränkter Haftung  Fabrik für Elektrotechnik in Marktredwitz, D-8590 Marktredwitz

Ansprüche

1. Scheibenbremsmotor mit
   - einer im lüfterseitigen Lagerschild (1) einliegenden Bremsspule (5),
   - einem auf das freie Motorwellenende (8) aufgesetzten Lüfter (9) und
   - einer unter Federdruck gegen einen Teil der Innenseite des damit auch als Bremsscheibe wirksamen Lüfters (9) axial verschiebbar am Lagerschild (1) gelagerten Ankerscheibe (10), wobei
     -- zwischen Ankerscheibe (10) und Lüfter (9) ein vorzugsweise ringförmig ausgebildeter Bremsbelag (13) angeordnet ist, und
     -- das die Spule (5) umschließende Magneteisen als gesonderter Magnetkörper (2), z.B. als zur Motorwellenachse (3) koaxialer Weicheisenring, in das aus Aluminium bestehende Lagerschild (1) eingebettet ist,

   dadurch gekennzeichnet,

   daß die Ankerscheibe (10) aus mehreren, insbesondere aus zwei in Aufeinanderlage miteinander verschweißten, nitrierten Stahlscheiben (20,21) besteht, von denen eine mit einem Radialschlitz (22) versehen ist.

2. Motor nach Anspruch 1,

dadurch gekennzeichnet,

daß der Bremsbelag an wenigen, über den Umfang verteilten Punkten auf den Lüfter (9) aufgeheftet bzw. aufgedornt ist.


3. Motor nach Anspruch 2,

dadurch gekennzeichnet,

daß auf einem zur Motorachse (3) koaxialen Kreis angeordnet auf der Innenseite des Lüfters (9) ringartige Vorsprünge (14) zur Einlage in entsprechenden Durchgangslöchern (15) des Bremsbelages (13) angeordnet sind, wobei der Außenumfang der Vorsprünge (14) in radialer Richtung aufgedornt mit Haftsitz am Innenumfang der Durchgangslöcher (15) anliegt.


4. Motor nach einem der vorhergehenden Ansprüche,

dadurch gekennzeichnet,

daß der Radialschlitz (22) in zwei einander diametral gegenüberliegende Umfangsbereiche der Durchtrittsöffnung (23) der Ankerscheibe (10) durchgehend ausmündet.


5. Motor nach einem der vorhergehenden Ansprüche

dadurch gekennzeichnet,

daß die dem Lagerschild (1) zugewandte Stahlscheibe (20) der Ankerscheibe (10) einen kleineren Durchmesser als die andere Stahlscheibe (21) aufweist und daß im dadurch gebildeten Ringabsatz (24) ein insbesondere als O-Ring ausgebildeter Distanzring (25) aus elastischem Werkstoff, z.B. aus Gummi, einliegt.

6. Motor nach Anspruch 5,

                dadurch gekennzeichnet,

daß der Distanzring (25) auch in bremsend den Lüfter (9) beaufschlagender Ankerscheiben-Axialstellung den Zwischenraum zwischen Lagerschild (1) und der Stahlscheibe (21) größeren Durchmessers überbrückt.

7. Motor nach einem der vorhergehenden Ansprüche

                dadurch gekennzeichnet,

daß die Ankerscheibe (10) von einer die Motorwelle (4) umgebenden Druckfeder (26), insbesondere Schraubendruckfeder, beaufschlagt ist, die sich mit einem Ende (27) am Lagerschild (1) abstützt und mit ihrem anderen Ende (29) in einer zentralen Ausnehmung (28) der dem Lagerschild (1) zugewandten Stahlscheibe (20) der Ankerscheibe (10) zentriert einliegt und sich dort an der anderen Stahlscheibe (21) der Ankerscheibe (10) abstützt.

FIG. 1

FIG. 2

FIG. 3